# FASCICULE DE BREVET EUROPEEN

(11) **EP 2 407 654 B1**
(45) Date de publication et mention de la délivrance du brevet: **13.12.2017**
(21) Numéro de dépôt: 11290295.2
(22) Date de dépôt: 29.06.2011
(51) Int. Cl.: F02D 19/08, F02D 19/12, F02D 41/00

(54) **Procédé de contrôle de la phase de combustion d'un mélange carburé d'un moteur à combustion interne suralimenté à allumage commandé, notamment de type essence**
Kontrollverfahren der Verbrennungsphase einer Kraftstoffmischung für einen aufgeladenen Verbrennungsmotor mit Fremdzündung, insbesondere für einen Benzinmotor
Method for controlling the combustion of a fuel-air mixture for a turbocharged internal combustion engine with controlled ignition, in particular a petrol engine

(30) Priorité: 13.07.2010 FR 1002959
(43) Date de publication de la demande: 18.01.2012
(73) Titulaire: IFP Energies nouvelles, 92500 Rueil-Malmaison (FR)
(72) Inventeur: Delpech, Vivien, 38780 Estrablin (FR)

(56) Documents cités:
- WO-A1-83/03120
- US-A1- 2008 060 627
- US-A1- 2009 076 705

## Description

La présente invention se rapporte à un procédé de contrôle de la phase de combustion d'un mélange carburé d'un moteur à combustion interne suralimenté à allumage commandé, notamment de type essence.

Elle vise plus particulièrement un tel moteur avec une injection indirecte de carburant mais n'écarte en aucune façon un moteur avec une injection directe de ce carburant.

Elle concerne essentiellement les moteurs qui sont le résultat d'une opération de miniaturisation, plus connue sous le terme anglais de "downsizing". Cette opération vise à réduire la taille et/ou la cylindrée du moteur tout en conservant la même puissance et/ou le même couple que des moteurs conventionnels.

Généralement ce type de moteur comprend une chambre de combustion à l'intérieur de laquelle un mélange carburé subit une étape de compression suivi d'une étape de combustion sous l'effet de l'allumage commandé, comme une bougie.

Il a pu être constaté que ce mélange carburé peut suivre une combustion anormale qui génère des contraintes mécaniques et/ou thermiques dont certains peuvent endommager gravement le moteur.

Cette combustion anormale est essentiellement due à un pré-allumage (ou auto-allumage) du mélange carburé avant que la bougie n'initie l'allumage de ce mélange présent dans la chambre de combustion.

En effet, compte tenu des fortes pressions et des températures élevées atteintes dans cette chambre de combustion par la suralimentation, un démarrage de combustion peut se produire sporadiquement bien avant le moment où se réalise l'allumage du mélange carburé par la bougie

Dans le cas où cette combustion anormale par pré-allumage ou auto-allumage se produit de manière violente, aléatoire et sporadique, elle est dénommée sous le vocable anglais de "rumble" ou claquement.

Cette dernière combustion anormale entraîne des niveaux de pressions très élevés (de l'ordre de 120 à 250 bars) ainsi qu'une augmentation de transferts thermiques qui peuvent entraîner une destruction partielle ou totale de l'équipage mobile du moteur, comme le piston ou la bielle.

De plus, il a pu être constaté que cette combustion anormale se réalise à fortes charges et généralement lors des bas régimes de fonctionnement du moteur.

Plus précisément, cette combustion anormale apparaît lorsque qu'une sous-avance à l'allumage est réalisée suite aux circonstances liées au cliquetis naissant, phénomène obligeant alors à diminuer cette avance et à augmenter ainsi le risque de "rumble" à bas régime.

Une solution pour éviter ce risque consiste à limiter l'angle de pression cylindre maximale de manière à éviter de générer des conditions de température et de pression propices à ce "rumble".

Cette solution a pour inconvénient de ne pas pouvoir exploiter tout le potentiel de performances de ce moteur à allumage commandé. En effet, l'augmentation de la charge via la pression de suralimentation engendre du cliquetis, ce qui nécessite l'application d'une sous-avance conventionnelle à l'allumage. Cette sous-avance décale la combustion et donc l'angle de pression maximale cylindre qui doit être limitée à une valeur usuelle de 35° d'angle de vilebrequin après le PMH (Point Mort Haut combustion). Les performances maximales du moteur à bas régime sont donc limitées à la charge pour laquelle le réglage d'avance à l'allumage correspond à ces deux critères cumulés. Une autre solution consiste à utiliser un carburant spécifique pour chaque région de fonctionnement du moteur, comme décrit par US 2009/0076705. La présente invention se propose donc de remédier aux inconvénients ci-dessus grâce à un procédé de combustion permettant de limiter les risques d'apparition de rumble.

A cet effet, la présente invention concerne un procédé de contrôle de la phase de combustion d'un mélange carburé d'un moteur à combustion interne suralimenté à allumage commandé, notamment de type essence, dans lequel le moteur comprend au moins un cylindre comprenant une chambre de combustion, au moins un moyen d'alimentation en carburant, au moins un moyen d'admission, au moins un moyen d'échappement, et des moyens d'allumage commandé, caractérisé en ce qu'il consiste, pour les fortes charges et les bas régimes dudit moteur :
- pendant la combustion du mélange carburé, à déterminer la valeur de l'angle de vilebrequin où se produit la pression cylindre maximale dans la chambre de combustion,
- à comparer la valeur déterminée à une valeur-seuil d'angle maximum représentative d'une combustion anormale dans ladite chambre,
- à détecter le début d'une combustion anormale lorsque la valeur déterminée atteint ladite valeur-seuil et lorsque les moyens d'allumage ne sont pas actionnés,
- à introduire un autre carburant dans le mélange carburé de manière à faire varier l'indice d'octane global de ce mélange carburé pour réduire l'angle de vilebrequin où se produit la pression cylindre maximale.

Le procédé peut consister à augmenter l'indice d'octane global du mélange carburé.

Le procédé peut consister à introduire un autre carburant de type gazeux dans le mélange carburé.

Avantageusement, le procédé peut consister à introduire un carburant gazeux de type GNV.

Le procédé peut consister à réaliser le mélange carburé à partir d'un carburant liquide.

Le procédé peut consister à réaliser le mélange carburé à partir d'un carburant essence.

Les autres caractéristiques et avantages de l'invention apparaîtront à la lecture de la description donnée ci-après en se référant aux dessins annexés où :
- la figure 1 montre un moteur utilisant le procédé de contrôle de la phase de combustion selon l'invention,
- la figure 2 montre des courbes de pression (P en bars) en fonction de l'angle de vilebrequin (°V) pour un moteur de l'art antérieur et pour un moteur utilisant le procédé selon l'invention et
- la figure 3 montre des courbes représentatives du couple (C en N.m) en fonction du régime moteur (R en tr/mn) pour un moteur conventionnel (AA) et pour un moteur utilisant le procédé selon l'invention (Inv).

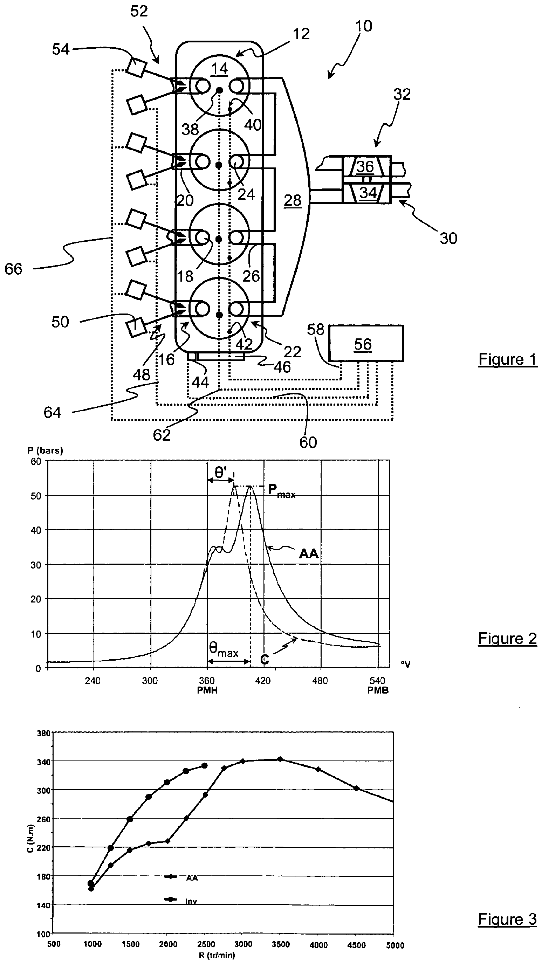

Sur la figure 1, le moteur illustré est un moteur à combustion interne suralimenté 10 à allumage commandé.

Ce moteur a la particularité de fonctionner avec un premier mode de combustion, dit monocarburation, selon lequel un seul carburant est utilisé, ou avec un autre mode de combustion, appelé multicarburation, permettant d'associer plusieurs carburants de nature différente.

A titre d'exemple non limitatif, le carburant utilisé pour le fonctionnement en monocarburation est un premier carburant liquide (essence, éthanol, biocarburant,...) avec un indice de résistance au cliquetis (indice RON),par exemple de l'ordre de 90 à 95, qui est associé, pour un fonctionnement en multicarburation, à au moins un autre carburant liquide ou gazeux (GNV (Gaz naturel pour Véhicule), GPL (Gaz de Pétrole Liquéfié), Méthane,...) qui possède un indice RON supérieur au premier carburant.

Pour des raisons de simplification de la description qui va suivre, il sera fait mention de combustion avec un carburant liquide de type essence pour la monocarburation et pour la multicarburation qui sera ici une bicarburation, le carburant liquide de type essence sera associé à un carburant gazeux de type GNV.

Le moteur illustré à la figure 1 comprend au moins un cylindre 12, ici quatre cylindres, logeant un piston à déglacement rectiligne alternatif (non représenté) délimitant une chambre de combustion 14 à l'intérieur de laquelle se produit la combustion d'un mélange carburé.

Le cylindre comprend des moyens d'admission d'air 16 avec au moins une soupape 18 associée à une tubulure d'admission 20. Ce cylindre comprend également des moyens d'échappement des gaz brûlés 22 avec au moins une soupape d'échappement 24 contrôlant une tubulure d'échappement 26.

Les tubulures d'échappement 26 sont connectées à un collecteur d'échappement 28 lui-même relié à une ligne d'échappement 30.

Un dispositif de suralimentation 32, par exemple un turbocompresseur, est placé sur cette ligne d'échappement. Ce turbocompresseur comprend une turbine 34 balayée par les gaz d'échappement circulant dans la ligne d'échappement et un compresseur 36 lié en rotation avec la turbine de façon à permettre la compression de l'air extérieur et de faire admettre cet air d'admission sous pression (ou air suralimenté) dans les tubulures d'admission 20.

Ce cylindre comprend en outre des moyens d'allumage commandé 38, par exemple une bougie d'allumage, qui permettent de générer une ou plusieurs étincelles permettant d'enflammer le mélange carburé présent dans la chambre de combustion du cylindre.

Il est également prévu de disposer de moyens 40 pour connaître l'état du déroulement de la combustion dans la chambre de combustion 14. A titre d'exemple illustré sur la figure 1, ces moyens sont un capteur de pression 42 permettant de mesurer l'évolution de la pression à l'intérieur de la chambre de combustion, dénommée pression cylindre. Cette pression est l'un des paramètres représentatifs de l'état du déroulement de la combustion du mélange carburé.

Bien entendu, tout autre moyen pour connaître l'état du déroulement de la combustion peut être utilisé, comme des moyens de détection de cliquetis disposés habituellement sur le carter cylindre du moteur, tel qu'un accéléromètre qui permet de générer un signal représentatif d'ondes de vibration.

De manière à pouvoir déterminer la position du piston à l'intérieur du cylindre, le moteur porte aussi un capteur angulaire 44 qui est placé en regard d'une cible 46 portée par le vilebrequin (non représenté) auquel le piston est relié.

Ce cylindre comprend aussi des premiers moyens d'alimentation en carburant 48, ici sous la forme d'un injecteur de carburant sous forme liquide 50, de type essence, qui permet d'introduire du carburant dans la tubulure d'admission 20.

Ce cylindre comprend également des deuxièmes moyens d'alimentation en carburant 52 avec un injecteur de carburant gazeux (GNV) 54 qui permet d'introduire du carburant gazeux dans la tubulure d'admission 20.

Le moteur comprend une unité de calcul et de commande 56, dénommée calculateur-moteur, qui permet de contrôler et de commander le fonctionnement de ce moteur.

Plus particulièrement, ce calculateur est relié directement ou indirectement par des conducteurs aux différents capteurs, sondes et/ou moyens de détection (température d'eau, température d'huile, pression dans la chambre de combustion, ...) que comporte le moteur. Les signaux reçus sont traités et le calculateur commande ensuite par des lignes de commandes les organes de ce moteur pour assurer son bon fonctionnement.

Comme illustré sur la figure 1 à titre d'exemple, les capteurs de pression 42 sont reliés à ce calculateur par un conducteur 58 pour envoyer un signal représentatif de la pression régnant à l'intérieur des cylindres, le capteur angulaire 44 est relié à ce calculateur par un conducteur 60 pour qu'il détermine les positions du piston durant son déplacement, les bougies 38 sont reliées par des lignes de commande 62 au calculateur de façon à commander le moment de l'allumage du mélange carburé et les commandes des injecteurs 50 et 54 sont raccordées par des lignes de commande 64, 66 au calculateur 56 pour commander les paramètres d'injection de carburant, comme la quantité de carburant injecté ou le moment d'injection.

Ce calculateur contient en outre des cartographies ou des tables de données qui permettent d'évaluer les paramètres nécessaires à son fonctionnement et cela en fonction des différentes conditions de fonctionnement du moteur, comme le régime du moteur ou la puissance demandée par le conducteur

Lorsque ce moteur est fortement chargé et à bas régime (entre 1000 et 2500 tr/min), le cliquetis impose d'appliquer une sous avance à l'allumage pour sortir de ce mode de combustion anormale.

Cette sous avance éloigne l'angle de pression cylindre maximal θₘₐₓ du point mort haut (PMH) et cet angle est généralement limité à une valeur usuelle d'environ 35° angle de vilebrequin après le PMH, comme cela est illustré sur la figure 2.

Dans le cas où cette valeur d'angle de vilebrequin θₘₐₓ est approchée ou dépassée, les risques pour la réalisation d'une combustion anormale de type "rumble" sont augmentés.

Pour éviter cela, il est prévu de contrôler le déroulement de la combustion du mélange carburé dans la chambre de combustion 14.

En se rapportant à la figure 2, la courbe AA montre l'évolution conventionnelle de la pression cylindre dans la chambre de combustion 14 d'un moteur fonctionnant en monocarburation en fonction de l'angle de vilebrequin (en °V), après l'admission du mélange carburé dans cette chambre.

Le piston comprime le mélange carburé présent dans la chambre de combustion jusqu'au voisinage du PMH où ce mélange est allumé par la bougie d'allumage 38. Suite à cet allumage, la pression cylindre augmente jusqu'à une valeur Pₘₐₓ à un angle de vilebrequin seuil θₘₐₓ, d'environ 35° après le PMH. Cette pression cylindre décroit ensuite jusqu'au PMB, où la pression dans la chambre de combustion sera voisine de la pression atmosphérique.

Au delà de cette valeur usuelle de 35°, les risques d'auto-inflammation du mélange carburé peuvent apparaitre.

En effet, si l'avance à l'allumage est trop tardive (ce qui génère un angle de pression cylindre maximal supérieur à 35°), les conditions de pression et température dans la chambre de combustion 12, juste avant l'étincelle à la bougie d'allumage, sont telles qu'une autoinflammation brutale (rumble) peut se produire.

Cette valeur de 35° d'angle de vilebrequin correspond avantageusement à une moyenne issue de l'expérience au banc d'essai de moteur.

Pour limiter le risque d'apparition de combustion anormale de type "rumble", il est nécessaire que la valeur de l'angle de vilebrequin mesuré de la pression cylindre maximale mesurée ne dépasse pas la valeur seuil fixée de l'angle de vilebrequin θₘₐₓ de cette pression.

Pour cela, le capteur de pression 42 mesure la pression dans la chambre 14 durant la phase de combustion comprise entre le PMH et le PMB et envoie le signal correspondant par le conducteur 58 au calculateur.

Avantageusement, cette valeur d'angle maximal peut être validée au préalable au banc d'essai moteur ce qui évite ainsi les capteurs de pression et la liaison avec le calculateur 56.

Ces cartographies d'angle de pression cylindre en fonction de la charge, avance et allumage, régime, pression de suralimentation.... sont intégrés dans le calculateur en évitant ainsi l'utilisation de ces capteurs en continu sur véhicule.

Simultanément, le capteur angulaire 44 communique le signal de position angulaire du vilebrequin à ce calculateur qui en détermine la position du piston.

A partir de ces deux signaux (pression et position angulaire), le calculateur détermine la valeur de l'angle de vilebrequin θ' après le PMH où se réalise la pression cylindre maximale.

Cette valeur déterminée d'angle θ' est ensuite comparée avec la valeur-seuil d'angle maximum θₘₐₓ qui est représentative de la limite maximale à partir de laquelle les risques d'apparition de "rumble" sont élevés.

Cette valeur-seuil est avantageusement contenue dans les tables de données du calculateur et, dans le cas de l'exemple décrit, est d'environ 35° après le PMH.

Ceci permet au calculateur de détecter le risque du début d'une combustion anormale de type "rumble" lorsque la valeur déterminée d'angle s'approche ou atteint la valeur-seuil d'angle maximum θₘₐₓ, et lorsque cette valeur est déterminée précocement dans le cycle, c'est-à-dire avant la production de l'étincelle à la bougie.

Ainsi, lorsque cette valeur-seuil est approchée voire atteinte, le calculateur contrôle les injecteurs de carburant de manière à passer d'un moteur fonctionnant en monocarburation (essence) à un moteur fonctionnant en bicarburation (essence et gaz).

L'injection concomitante d'un second carburant gazeux, de type GNV par exemple, permet alors de modifier l'indice d'octane globale de ce mélange et d'augmenter ainsi la résistance au cliquetis. Ceci permet alors d'augmenter la charge et/ou l'avance à l'allumage tout en maintenant l'angle de pression maximal du cylindre au dessous de la valeur maximale autorisée

Ce second carburant a pour intérêt d'avoir des caractéristiques de résistance à l'auto-inflammation (Indice d'octane RON) qui permettent de recaler la combustion en modifiant l'avance à l'allumage.

Via cette injection concomitante, il est donc possible d'augmenter les performances du moteur de façon conséquente tout en restant éloigné de la zone à risque du "rumble".

Plus précisément, pendant la phase d'admission du moteur, le calculateur 56 contrôle les injecteurs 50 et 54 par les lignes de commande 64, 66 de manière à ce qu'une partie de la masse de l'essence initialement injectée par l'injecteur 50 dans la tubulure 20 soit remplacée par une injection de GNV par l'injecteur 54.

Ceci permet de modifier l'indice d'octane du mélange carburé initial et d'augmenter cet indice d'octane global du mélange carburé obtenu de par la présence du carburant GNV avec un indice RON de plus grande valeur que celui de l'essence.

La quantité optimale de gaz à injecter correspond à l'indice d'octane global nécessaire pour obtenir un mélange des deux carburants afin que le point de fonctionnement du moteur soit au couple souhaité, avec une avance à l'allumage qui soit limite au cliquetis et générant un angle de pression maximal égal ou inférieur aux 35° après le PMH.

Cette injection concomitante d'un deuxième carburant gazeux permet de maintenir l'angle de pression cylindre maximale θ' (voir figure 2) au dessous de la valeur-seuil θₘₐₓ avec l'avantage supplémentaire de rester à la richesse 1 pour le mélange carburé.

Bien entendu, il est à la portée de l'homme du métier de déterminer la proportion massique de GNV par rapport à l'essence pour obtenir l'indice RON souhaité de manière à s'éloigner de la zone de risque de cliquetis tout en restant dans les critères autorisés d'angle de pression cylindre maximal, en limitant les risques de "rumble".

Ceci permet en outre d'augmenter le rapport volumétrique des moteurs fonctionnant à l'essence avec tous les avantages que cela comporte.

Grâce à l'invention et comme visible sur la figure 3, le couple obtenu avec une injection concomitante de GNV permet de d'obtenir un plus fort couple à un plus bas régime (courbe Inv) que le couple obtenu par un moteur de l'art antérieur (Courbe AA).

## Revendications

1. Procédé de contrôle de la phase de combustion d'un mélange carburé d'un moteur à combustion interne suralimenté à allumage commandé, notamment de type Essence, dans lequel le moteur comprend au moins un cylindre (12) comprenant une chambre de combustion (14), au moins un moyen d'alimentation en carburant (48, 52), au moins un moyen d'admission (16), au moins un moyen d'échappement (22), et des moyens d'allumage commandé (38), **caractérisé en ce qu'**il consiste, pour les fortes charges et les bas régimes dudit moteur :
- pendant la combustion du mélange carburé, à déterminer la valeur de l'angle de vilebrequin (θ') où se produit la pression cylindre maximale (Pₘₐₓ) dans la chambre de combustion,
- à comparer la valeur déterminée à une valeur-seuil d'angle maximum (θₘₐₓ) représentative d'une combustion anormale dans ladite chambre,
- à détecter le début d'une combustion anormale lorsque la valeur déterminée atteint ladite valeur-seuil et lorsque les moyens d'allumage ne sont pas actionnés,
- à introduire une quantité d'un autre carburant dans le mélange carburé de manière à faire varier l'indice d'octane global de ce mélange carburé pour réduire l'angle de vilebrequin où se produit la pression cylindre maximale.

2. Procédé de contrôle selon la revendication 1, **caractérisé en ce qu'**il consiste à augmenter l'indice d'octane global du mélange carburé.

3. Procédé de contrôle selon la revendication 1, **caractérisé en ce qu'**il consiste à introduire un autre carburant de type gazeux dans le mélange carburé.

4. Procédé de contrôle selon la revendication 3, **caractérisé en ce qu'**il consiste à introduire un carburant gazeux de type GNV.

5. Procédé de contrôle selon l'une des revendications précédentes, **caractérisé en ce qu'**il consiste à réaliser le mélange carburé à partir d'un carburant liquide.

6. Procédé de contrôle selon la revendication 5, **caractérisé en ce qu'**il consiste à réaliser le mélange carburé à partir d'un carburant essence.

## Patentansprüche

1. Verfahren zur Kontrolle der Verbrennungsphase eines Kraftstoffgemisches eines aufgeladenen Verbrennungsmotors mit gesteuerter Zündung, insbesondere vom Typ Benzin, bei dem der Motor mindestens einen Zylinder (12), umfassend eine Brennkammer (14), mindestens ein Kraftstoffzuleitungsmittel (48, 52), mindestens ein Einlassmittel (16), mindestens ein Ausstoßmittel (22) und Mittel zur gesteuerten Zündung (38), **dadurch gekennzeichnet, dass** es darin besteht, für die starken Belastungen und die niedrigen Drehzahlen des Motors:
- während des Verbrennens des Kraftstoffgemisches den Wert des Kurbelwinkels (θ°) zu bestimmen, bei dem der maximale Zylinderdruck (Pₘₐₓ) in der Brennkammer entsteht,
- den bestimmten Wert mit einem Grenzwert eines Maximalwinkels (θₘₐₓ), der für eine anormale Verbrennung in der Kammer repräsentativ ist, zu vergleichen,
- den Beginn einer anormalen Verbrennung zu erfassen, wenn der bestimmte Wert den Grenzwert erreicht, und wenn die Zündungsmittel nicht bestätigt sind,
- eine Menge eines anderen Kraftstoffes in das Kraftstoffgemisch einzuleiten, um den Gesamtoktanindex dieses Kraftstoffgemisches zu variieren, um den Kurbelwinkel, bei dem der maximale Zylinderdruck entsteht, zu verkleinern.

2. Kontrollverfahren nach Anspruch 1, **dadurch gekennzeichnet, dass** es darin besteht, den Gesamtoktanindex des Kraftstoffgemisches zu erhöhen.

3. Kontrollverfahren nach Anspruch 1, **dadurch gekennzeichnet, dass** es darin besteht, einen anderen Kraftstoff gasförmigen Typs in das Kraftstoffgemisch einzuleiten.

4. Kontrollverfahren nach Anspruch 3, **dadurch gekennzeichnet, dass** es darin besteht, einen gasförmigen Kraftstoff des Typs GNV einzuleiten.

5. Kontrollverfahren nach einem der vorhergehenden Ansprüche, **dadurch gekennzeichnet, dass** es darin besteht, das Kraftstoffgemisch aus einem flüssigen Kraftstoff herzustellen.

6. Kontrollverfahren nach Anspruch 5, **dadurch gekennzeichnet, dass** es darin besteht, das Kraftstoffgemisch aus einem Benzinkraftstoff herzustellen.

## Claims

1. A method of controlling the combustion phase of a fuel mixture of a spark-ignition supercharged internal-combustion engine, notably of gasoline type, wherein the engine comprises at least one cylinder (12) including a combustion chamber (14), at least one fuel supply means (48, 52), at least one intake means (16), at least one exhaust means (22) and spark ignition means (38), **characterized in that** it consists, for high loads and low speeds of said engine:
- during combustion of the fuel mixture, in determining crank angle value (θ') where the maximum cylinder pressure (Pₘₐₓ) occurs in the combustion chamber,
- in comparing the determined value with α maximum angle threshold value (θₘₐₓ) representative of an abnormal combustion in said chamber,
- in detecting the start of an abnormal combustion when the determined value reaches said threshold value and when the ignition means are not actuated,
- in feeding an amount of another fuel into the fuel mixture in order to vary the global octane number of this fuel mixture so as to reduce the crank angle where the maximum cylinder pressure occurs.

2. A control method as claimed in claim 1, **characterized in that** it consists in increasing the global octane number of the fuel mixture.

3. A control method as claimed in claim 1, **characterized in that** it consists in feeding another fuel of gas type into the fuel mixture.

4. A control method as claimed in claim 3, **characterized in that** it consists in feeding a gaseous fuel of VNG type.

5. A control method as claimed in any one of the previous claims, **characterized in that** it consists in preparing the fuel mixture from a liquid fuel.

6. A control method as claimed in claim 5, **characterized in that** it consists in preparing the fuel mixture from a gasoline fuel.
